# EUROPÄISCHE PATENTANMELDUNG

(11) **EP 1 188 721 A1**
(43) Veröffentlichungstag der Anmeldung: **20.03.2002**
(21) Anmeldenummer: 01121246.1
(22) Anmeldetag: 05.09.2001
(51) Int. Cl.: C02F 3/12, C02F 3/06, C02F 3/26

(54) **Verfahren zum Aufbereiten von Wasser sowie Einrichtung zur Durchführung des Verfahrens**

(30) Priorität: 08.09.2000 DE 10044697; 08.09.2000 DE 10044698; 08.09.2000 DE 10044696; 08.09.2000 DE 20015594 U; 08.09.2000 DE 20015618 U; 08.09.2000 DE 20015591 U
(71) Anmelder: Würdig, Uwe, Dipl.-Ing., 13086 Berlin (DE)
(72) Erfinder: Würdig, Uwe Dipl.-Ing., 13086 Berlin (DE); Herrmann, Frank, 12619 Berlin (DE)
(74) Vertreter: Erich, Dieter, Dipl.-Ing.(FH)

(57) **Zusammenfassung**

Die Erfindung betrifft ein Verfahren zum Aufbereiten von flüssingen Medien, insbesondere Wasser, unter Verwendung von stufenlos-, mengen- und druckreguliertem darin eingetragenen Gas sowie dessen Anwendung beim Aufbereiten aus dem Boden geförderten Wassers einschießlich eines Entfernens von unerwünschten Beimengungen und Einrichtungen zur Durchführung des Verfahrens.
Der Erfindung liegt die Aufgabe zugrunde, mittels des Verfahrens und der dazugehörigen Einrichtungen Gase in flüssige Medien mit hoher Genauigkeit, Druckkonstanz sowie Vorhaltezeit einzutragen, damit behandeltes Wasser ohne zusätzlichen energetischen Aufwand zur Aufbereitung von Trinkwasser bereitzustellen und kontrolliert Beimengungen biologisch abzubauen.
Hierzu wird das mittels der Saugpumpe (6) aus dem Brunnen (30) geförderte Wasser über Dosierventil (69) feinblasig mit Sauerstoff angereichert und anschließend zur biologischen Behandlung in den Filterreaktor (43) geführt. Der Filterreaktor (43) ist rückspülbar gestaltet.

## Beschreibung

Die Erfindung betrifft ein Verfahren zur Aufbereitung von Wasser unter Verwendung von stufenlos-, mengen- und druckreguliert darin eingetragenem Gas sowie dessen Anwendung beim Aufbereiten aus dem Boden geförderten Wassers einschließlich eines Entfernens von unerwünschten Beimengungen und Einrichtungen zur Durchführung des Verfahrens.

Es ist bekannt, Gase in flüssige Medien einzutragen und ihr Volumen durch eine Aufteilung in feine Perlen zu vergrößern. Dazu sind im Stand der Technik Vorrichtungen bekannt, welche das Eintragen des Gases und die Erzeugung seiner Perligkeit über poröse Werkstoffe gewährleisten.

Die DE A1 30 21 85 stellt eine Vorrichtung zum Imprägnieren von Wasser mit einem Gas vor, bei der das Gas und das Wasser in eine Kühlschlange gegeben und in einem Behälter angeordnet ist. Das Gas wird mit dem Wasser unter hohem Druck zusammengeführt. Dazu wird ein poröser Körper verwendet, der in ein Wasserzulaufrohr ragt, dessen unteres Ende oberhalb der Mündung eines Auslaufsteigerohres liegt. Die Vorrichtung gewährleistet wohl einen Übergang des Gases in das Wasser und gleichzeitig eine Regulierung des Druckgefälles, gestattet aber keine dauerhafte Verwendung und Funktionstüchtigkeit.

Die Schrift DE C2 31 30 597 stellt ein Verfahren zum Begasen von Flüssigkeiten, insbesondere zum biologischen Aufbereiten von Abwasser, in einem Bioreaktor vor. Dabei wird der Teilstrom oberhalb eines Flüssigkeitsspiegels im zentralen Bereich des Behälterbodens aus dem Umlaufstrom abgezweigt, mit Gas angereichert und der so behandelte Teilstrom im peripheren Bereich des Behälterbodens dem Umlaufstrom zugeführt. In einer Ausgestaltungsform wird für die Eintragung des Gases, vorrangig normale Umgebungsluft, eine Vorrichtung verwendet, die porös ausgebildet ist.

Die DE U1 297 07 300 offenbart eine Vorrichtung zum Mischen von Fluiden. Hier wird ein erstes Fluid einem zweiten feinteilig und homogen beigemischt. Der dazu verwendete poröse Körper ist beispielsweise aus einer Sinterbronze gebildet und am Kopf einer Lanzette eingeführt, welche in den Flüssigkeitsstrom hineinragt. Anwendung soll die Erfindung bei der Herstellung von vermischten Flüssigkeits-Gas-Gemengen, Gas-Gas-Gemischen, in den Bereichen der Medizin, Pharmamedizin und Ernährungstechnik finden.

Die EP A1 476 732 kennzeichnet eine erfindungsgemäße Lösung, gemäß der ein Mündungsbereich eine Begasungsdüse mit einer Abdeckung aufweist, der einer vom Gas durchströmten Kammer vorgeordnet ist. Das untere Ende der Kammer wird durch einen gasdurchlässigen Rost gebildet. Zwischen diesem und der Abdeckung befinden sich in der so gebildeten Kammer zahlreiche Festkörper, die unter der Wirkung des den Rost und die Kammer durchströmenden Gases ein Wirbelbett bilden.

In der EP A2 945 169 ist eine Vorrichtung unter Schutz gestellt, die ein Rohr mit einem vertikal darauf gerichteten Aufsatz vorstellt, in den ein lanzettenartig in das horizontale Rohr ragendes Dosierstück eingefügt ist, welches in seiner Neigung der Strömungsrichtung der Flüssigkeit folgend an seinem vorderen kopfartig ausgebildeten Ende eine Vorrichtung trägt, über die das Gas in die Flüssigkeit eingetragen wird. Das Gas durchströmt dabei Kanäle und wird über diese einem äußeren Ring zugeführt, der aus gesintertem Material gebildet ist und das Gas feinporig in die umspülende Flüssigkeit einleitet. In einer Ausführungsform der offenbarten Lösung ist der Lanzette eine Dosiereinrichtung vorgeordnet bzw. die Lanzette in schräger Richtung in das Rohr eingeführt. Ein Nachteil dieser Vorrichtung ist darin zu sehen, dass das poröse Material so eingeordnet ist, dass seine Funktionsdauer sehr eingeschränkt erscheint. Es ist nicht erkennbar, dass dem porösen Material eine über das feinperlig auszubildende Gas hinausgehende Funktion zugeordnet worden ist.

Die WO 99/29404 zeigt eine Möglichkeit, Gas dosiert in vorbeigeführte Flüssigkeiten zu leiten. Das Gas wird druckbeaufschlagt in die Flüssigkeit eingegeben, ohne den ursprünglichen Druck zu variieren und leitet sich feinporig gestaltet in die Flüssigkeit ein. Durch das Verfahren wird eine homogene Mischung und Dosierung erreicht und eine damit bestückte Abfüllmaschine kann kontinuierlich arbeiten.

Es ist weiter bekannt, Wasser von störenden Beimengungen, wie Eisen und Mangan, mittels eines Verfahrens sowie einer dazugehörigen Vorrichtung zu befreien. Die Firma Winkelkempner GmbH offenbart in einer Firmenschrift ein unter der Bezeichnung "FERMANOX" offenbartes Verfahren und eine dazugehörige Wasseraufbereitungsanlage. Gemäß diesem Verfahren wird das Wasser dadurch aufbereitet, dass es mit Luftsauerstoff angereichert, für eine unterirdische Wasseraufbereitung dem Brunnen wieder zugeführt wird. In diesem Prozess wird das Wasser in den für die normale Wasser-gewinnung herangezogenen Bodenschichten im Bereich des Brunnens mit Sauerstoff aus der Umgebungsluft in geeigneter Form angereichert. Der Aufbereitungsprozess des Wassers in den Bodenschichten erfolgt dann als natürlicher Vorgang ohne weitere technische Einrichtungen in den gewachsenen Bodenformationen nach ausreichender Reaktionszeit. Das Verfahren ist an sich dem Grunde nach effektiv, bedingt aber einen relativ hohen apparativen Aufwand. So wird der Wasserversorgungsanlage ein druckloser Zwischenspeicher-/Entlüftungsbehälter beigeordnet, der nachts von der Wasserversorgungsanlage separat gefüllt wird. Während des Füllvorgangs wird das Wasser mittels einer Einrichtung mit Sauerstoff aus der Umgebungsluft angereichert. Danach fließt es über ein Auslaufventil in den Brunnen zurück, und in den wasserführenden Bodenschichten wird eine natürliche Selbstreinigung in Gang gesetzt. Kiesfilter in unmittelbarer Nähe des Brunnens mit Rückspülvorrichtungen sind somit nicht mehr erforderlich. Diese Verfahrensführung hat den erheblichen Nachteil, dass das mit Luftsauerstoff angereicherte Wasser in einer aufwendigen Zwischenstufe, in einem Zwischen-/Entlüftungsbehälter über einen bestimmten Zeitraum mit Gas in Verbindung gebracht wird. Das Gas ist die normale Umgebungsluft, die nur aus 21 % Sauerstoff besteht. Damit werden dem Zwischen-/Entlüftungsbehälter störende Gase in einem Volumen von ca. 78 % beigegeben, das dann aus dem Behälter zurückfließende Wasser belastet und den wasserführenden Bodenschichten Gasanteile zugeführt, die reaktiv für das Verfahren ohne Bedeutung sind, aber das Wasser belasten. Auch die Zwischenschaltung der für die Dosierung und Homogenisierung der Luft vorgesehene Zwischen-/Entlüftungsbehälter stellt eine signifikante Aufwandserhöhung für Vorrichtungen dieser Art dar. Es ist auch nicht gewährleistet, dass der schon geringe Anteil an Sauerstoff auch feinperlig genug in Wasser gelöst, die ausreichenden Grenzwertoberflächen für eine chemische und biologische Aktivierung aufweist.

Wasser aufzubereiten und störende Beimengungen, wie Eisen und Mangan, aus dem Trinkwasser durch Anwendung chemischer und biologischer Reinigungsverfahren zu entfernen ist allgemein bekannt. Gemäß einer Veröffentlichung der Firma Winkelnkemper GmbH unter dem Markenzeichen "FERMANOX" wird ein Verfahren dargestellt, mittels dessen im Rahmen eines unterirdischen Wasseraufbereitungsvorganges das Rücklaufwasser einen hohen Sauerstoffeintrag erhält und danach in den Boden zurückgeführt wird. Im Rücklaufwasser sollen möglichst wenige, für den Aufbereitungsprozess unter der Erdoberfläche unerwünschte Gase, wie Stickstoff, Kohlensäure etc., gelöst sein, weil diese Gase den Aufbereitungsprozess unter der Erdoberfläche stören. Die Methode ist verfahrenstechnisch sehr aufwendig und bedingt einen hohen apparativen Aufwand, der, insbesondere bei kleinen und mittleren Wasseraufbereitungsanlagen, sich sehr kostenerhöhend darstellt. Weiterhin hat dieses Verfahren den Nachteil, dass die Eintragung des Sauerstoffs, der gemäß diesem Verfahren weitestgehend aus der Umgebungsluft gewonnen wird, sehr unkonzentriert und im Effekt nur unzureichend messbar ist. Die Reaktivität des Sauerstoffs in Bezug auf den Oxidationsvorgang der auszufällenden Metallbeimengungen sowie die Stimulierung der biologischen Abbaumechanismen im Boden ist nicht messbar und wenig zu beeinflussen.

Die DE A1 39 03 608 offenbart ein Verfahren zur Hochleistungsfiltrierung, mit dem für eine Kontaktenteisenung und -entmanganung Grund- oder Oberflächenwasser in einer geschlossenen Schnellfilteranlage behandelt wird. Vorrangig wird die Aufbereitung von Rohwasser mit mittleren oder hohen Mangangehalten dargestellt, wobei das zuvor angereicherte Rohwasser mit einer definierten Filtergeschwindigkeit ein Filtermedium durchströmt, das durch die Ausfällung der Schwermetalle verschlammt und nach bestimmten Durchströmzeiten durch eine Luftspülung aufgebrochen und im Rahmen einer daran anschließenden Wasserspülung vom Schlamm gereinigt wird. Die Reinigung erfolgt in einem Filterrückspülvorgang. Nachteilig bei diesem Verfahren ist der geteilte Rückspülvorgang mit zwei unterschiedlichen Medien und das nicht Vorhandensein von aktivierenden Reagenzien.

Der Erfindung liegt die Aufgabe zugrunde, ein Verfahren zur Aufbereitung von Wasser unter Verwendung von stufenlos-, mengen- und druckreguliert darin eingetragenem Gas sowie dessen Anwendung beim Aufbereiten aus dem Boden geförderten Wassers einschließlich eines Entfernens von unerwünschten Beimengungen und Einrichtungen zur Durchführung des Verfahrens zu schaffen, Gase in flüssige Medien mit hoher Genauigkeit und Druckkonstanz sowie großer Vorhaltezeit einzutragen, damit behandeltes Wasser ohne zusätzlichen energetischen Aufwand zur Aufbereitung von Trinkwasser bereitzustellen und kontrolliert Beimengungen biologisch abzubauen.

Erfindungsgemäß wird die Aufgabe in der ersten Stufe durch ein Verfahren zum stufenlosen, mengen- und druckregulierten Eintragen von Gas in ein flüssiges Medium, insbesondere Wasser, unter Verwendung eines in eine Halterung eingeordneten porigen Dosiermittels, dem an seiner Eingangsseite ein Gas mit hohem Druck zugeführt wird, das im Dosiermittel während seines Durchfließens druckgemindert, reguliert und feinblasig strukturiert, in seiner Menge dosiert, an dessen gegenüberliegender Übergangsseite austretend, einer Überleitungsstelle zugeführt, in der das Gas nochmals druckreguliert, in das vorbeiströmende flüssige Medium zum Einfließen gebracht wird, die einen Verschluss aufweist, mit der das Dosiermittel vor einer Benetzung des flüssigen Mediums bewahrt wird.

Die Erfindung ist vorteilhaft ausgestaltet, wenn mit dem Durchdringen der Dosierstelle das konditionierte Gas den erforderlichen Druck und die notwendige Feinperligkeit zum Eintragen in das flüssige Medium erreicht. Die Erfindung ist weiterhin vorteilhaft ausgestaltet, wenn das Gas in seiner Übergangsstelle im Bereich des bewegten flüssigen Mediums einer weiteren Druckregulierung ausgesetzt wird. Die erste Stufe des Verfahrens erhält eine Ausgestaltung durch eine Vorrichtung zum mengen- und druckregulierten Eintrag von Gas in flüssige Medien, die in einem von dem flüssigen Medium durchflossenen Gehäuse eingeordnet ist. Der Vorrichtung ist ein Dosiermittel zugeordnet, das in dem Gehäuse aufgenommen, einseitig an seiner Eingangsseite mit einem unter Druck gehaltenen Gas beaufschlagt, durchflossen wird. Die Ausgangsseite des Dosiermittels ist einer Gasüberleitungsstelle zugerichtet, die von einer das flüssige Medium von dem Dosiermittel fernhaltenden Manschette fest und kraftschlüssig umschlossen ist.

Die Erfindung ist vorteilhaft ausgebildet, wenn das Dosiermittel mit der Gasüberleitungsstelle durch eine lanzettenartige Führung verbunden ist, in der das aus dem Dosiermittel mit einem konstanten Druck feinperlig austretende Gas aus der in das flüssige Medium ragende Gasüberleitungsstelle zugeordnet ist, die Gasauslassöffnungen trägt. Die Gasauslassöffnungen sind von der Manschette fest umschlossen. Die Manschette verschließt dadurch die Gausauslassöffnungen von außen gegen den Zutritt des flüssigen Mediums, in welches die lanzettenartige Führung eingetaucht ist. Durch die Abschirmung des Innenraumes der lanzettenartigen Führung ist es gewährleistet, dass die Dosierstelle von Schwebestoffen des flüssigen Medium unberührt bleibt und ihre Porigkeit nicht durch die Ablage der Schwebestoffe des flüssigen Mediums verliert. Wie dargestellt, verschließt die Manschette die Gasauslassöffnung mit einer konstanten Spannung und liegt fest an den zylindrischen Außenflächen, die Öffnungen überspannend, an. Sie hat die Funktion eines Membran. Die konstante Spannung erzeugt einen Flächendruck der Innenfläche der Manschette in einer spezifischen Größe, welche aus dem Dosiermittel der Gasüberleitungsstelle zufließt. Das Gas hat den Druck zu überwinden, um in dem Spalt zwischen der Manschette und der lanzettenartigen Führung hindurch zu gelangen und mit dem flüssigen Medium in Kontakt zu kommen. Bei konstantem Druck der Manschette und gleichbleibendem Außendruck erfolgt eine zusätzliche Feinkonditionierung des in dem Dosiermittel druckkonstant und feinperlig eingestellten Gases, insbesondere eines Sauerstoffs. Das Gas tritt zwischen den Anlageflächen gleitend aus, ist dabei druckkonstant und hat eine weitergehende gleichmäßigere Perlung erhalten, wie an der Übergangsseite der Dosierstelle. Die Erfindung ist dadurch ausgeformt, dass das Dosiermittel ein Diaphragma ist, durch welches das Gas in einem konstanten Druck gehalten, in eine perlige Struktur gebracht, bewegt ist. Die Einrichtung ist dadurch erfindungsgemäß weiter ausgebildet, dass das Diaphragma an den parallel zu seiner Längsmittenachse verlaufenden Seitenflächen abgedichtet umschlossen, in den Einsatz der Einrichtung eingeordnet ist.

Die erfindungsgemäße Lösung weist eine Vielzahl von den Stand der Technik überragenden Vorzügen auf. Zum einen gewährleistet die erfindungsgemäße Einrichtung in ihrer Gestaltung die Erzeugung von unter dem Gesichtswinkel eines konstanten druck- und mengenmäßig konditionierten, in einer gleichmäßigen feinperligen Struktur vorliegenden Gases. Diese Voraussetzungen sind die Basis dafür, dass chemische und biologische Abläufe, wie das Oxidieren von mit Wasserinhaltsstoffen, wie mangan- und eisenbelasteten Medien, vor allem Trinkwasser, aus Brunnenanlagen, mit hoher Genauigkeit durchgeführt werden können. Dem mitlesenden Fachmann wird es deshalb nicht fremd sein, wenn er, ohne das Konzept der erfindungsgemäßen Lösung zu verlassen, der Dosiereinrichtung eine Gasperlenzähleinrichtung vorordnet, um die Menge des der Einrichtung zufließenden Sauerstoffs feststellen und die auszulösenden Reaktionen im Rahmen der Verfahrensschritte genau steuern zu können. Es bietet sich vorteilhaft an und passt in das erfinderische Konzept der Lösung, wenn die Einrichtung im Sinne des Verfahrens bei Wasserversorgungsanlagen, deren gefördertes Wasser Beimengungen enthält, die durch Einbeziehung des erfindungsgemäßen Verfahrens und Einrichtungen unkompliziert über- und untererdig, also in Filterreaktoren und in den den jeweiligen Brunnen umgebenden Bodenschichten durch Rückfließen des vorher geförderten Wassers Verwendung findet. Die vorteilhafterweise erreichte Druckkonstanz, einhergehend mit der Feinperligkeit des Gases, vorrangig eines Sauerstoffs, ist geeignet, in Rohrleitungen von flüssigen Medien, wie Trink- und Brauchwasser, aufbereitetem Abwasser und ähnlichen Medien, zum Eintrag zu gelangen, und den Beginn eines Oxidationsvorganges zu gewährleisten, dessen Abläufe bewusst zu steuern und die Lebensvoraussetzungen von Mikroorganismen zu fördern, die für eine biologische Aufbereitung der flüssigen Medien notwendig sind. Nicht nur die Feinperligkeit und die Druckkonstanz des verfahrensgemäß aufbereiteten Gases garantieren die vorteilhafte Gestaltung der Erfindung, sondern gleichermaßen der hohe Grad der Gaskonzentration, vorteilhafterweise eines Sauerstoffs, der unter solchen Voraussetzungen in die Flüssigkeit eingetragen, mit nahezu einer 100 %igen Konzentration eingeleitet und von diesen vollständig aufgenommen werden kann. Das Verfahren findet eine erste Verwendung, wenn das aus dem Boden geförderte Wasser mittels einer Wasserversorgungsanlage, die mit einer Wasseraufbereitungsanlage versehen ist, aufbereitet und in den Boden zurückgeführt wird. Die Aufbereitung richtet sich auf das Entfernen von Eisen und Mangan aus dem geförderten Wasser mittels Sauerstoff in hoher Konzentration. Danach wird das behandelte Wasser durch eine wechselseitige Verwendung der zum Brunnen führenden Leitung, die mit einem Druckspeicherbehälter zum Speichern des Wassers verbunden ist, zugeführt. Der Druckspeicherbehälter weist eine Ableitung auf, mit der nach dem Öffnen eines Ventils aus dem Druckspeicherbehälter fließendes Wasser einer Sauerstoffdosierstelle zugeleitet wird. Über die Sauerstoffdosierstelle wird in das Wasser feinblasig und konzentriert reiner Sauerstoff eingetragen, das ohne Verweilen in Zwischenaggregaten periodisch über das Brunnenrohr dem Brunnen zugeführt wird. Das für eine Rückführung in den Brunnen zu verwendende Wasser wird aus dem Speicherbehälter der Wasserversorgungsanlage heraus einem gesteuert, sich öffnenden Ventil zugeleitet und gelangt zu einer Dosierstelle mit einer Dosiereinrichtung, über die der Sauerstoff eingetragen wird. Von der Dosiereinrichtung aus wird das Wasser dem Brunnenrohr in den Bereich zugeführt, der vor dem ersten, jetzt geschlossenen Ventil der Saugleitung liegt. Bei Beginn dieses Vorganges ist der Druck im Speicherbehälter in den oberen Bereich geführt worden und das Wasser wird durch den Eigendruck im Behälter ohne Pumpenförderung in die Rücklaufleitung eingespeist. Die Menge des zurückzuführenden Wassers wird durch die Kapazität des Druckspeicherbehälters bestimmt.

Verfahrensseitig kann es vorteilhaft sein, wenn der Dosiereinrichtung eine Dosierstrecke nachgeordnet wird. Die Dosierstrecke hat dabei die Aufgabe, während des Durchfließens eine Durchmischung des zudosierten Sauerstoffs über eine längere Strecke zu ermöglichen. Dabei ist es vorteilhaft, dass dann die Grenzübergangsflächen ausgeglichen werden und der Sauerstoff gleichmäßig verteilt, heterogen verbunden mit dem Wasser, in den Brunnen eingetragen werden kann. Selbstverständlich sieht der mitlesende Fachmann, dass hier die Dosierstrecke nicht künstlich verlängert werden soll, dass die Rohrstrecke, welche sich nach der Dosierstrecke anschließt, und den Rohrstrang von der Dosierstelle bis in den Brunnenboden ausbildet, als Dosierstrecke ausreichend ist, um eine vollständige Durchmischung des Wassers zu erreichen.

Dazu bedient sich das Verfahren einer Vorrichtung, die mit einem Brunnen verbunden ist, aus dem das Wasser über eine erste Sperreinrichtung, beispielsweise ein federbelastetes Rückschlagventil, und eine danach folgende Förderpumpe in einen Druckspeicherbehälter geführt ist. Der Druckspeicherbehälter verfügt an seiner Ausgangsseite über eine entsprechende Leitung, die zur normalen Hauswasserversorgung benutzt wird, aber gleichzeitig eine Abzweigung trägt, die zu einer gesteuerten Dosiereinrichtung führt. Die Abzweigung ist an ihrer dem Druckspeicherbehälter zugeordneten Seite mit einem gesteuerten Ventil ausgerüstet, das dann geschlossen ist, wenn der normale Betrieb der Wasserversorgungsanlage abläuft. Zum notwendigen Sauerstoffeintrag in den Brunnen wird über die Steuerung die Pumpe abgeschaltet und anschließend das Steuerventil vor der Dosierstelle geöffnet. Das federbelastete Rückschlagventil in der Saugleitung schließt dabei selbsttätig und über den Druck des Behälters wird das Wasser vor dem zweiten gesteuerten Ventil in der Leitung für die Dosierung gehalten. Das Ventil wird geöffnet und über den Behälterdruck das Wasser in Richtung der Dosierstrecke bewegt, die es dann mit Sauerstoff bestückt und mit Blick auf die normale Durchflussrichtung in Richtung der Saugöffnung vor dem ersten Ventil in das Saugrohr einleitet, wo es dann bis in den Brunnenfilter fließt und sich von dort über das anstehende Grundwasser in die Bodenschichten verteilen kann.

Vordruck und Behältervolumen müssen auf die jeweiligen Bedingungen und Erfordernisse des Wasseraufbereitungsvorganges angepasst sein, um möglichst in einem Rücklaufzyklus mit einer bestimmten Rücklaufwassermenge die für den Enteisenungsprozess nötige Sauerstoffmenge in die Grundwasserschichten zu transportieren. Durch eine Steuerung der Ventilspiele bzw. der Pumpenarbeit können die Perioden der Einspeisung sauerstoffangereicherten Wassers in den Brunnen bewusst gesteuert werden. Es ist eine Ausbildungsart der Erfindung, dass der Saugleitung ein federbelastetes Rücklaufventil vorgeordnet und der im Behälterbereich positionierten Saugpumpe in Richtung des normalen Wasserstroms ein weiteres gesteuertes Ventil dem Behälter auf seiner Auslassseite nachgeordnet ist.

Es ist eine Ausbildungsart der erfindungsgemäßen Lösung, wenn das rückführende Rohr in der normalen Saugrichtung, dem ersten Ventil vorgeordnet, in das Saugrohr einmündet und vor der Einmündung ein gesteuertes Ventil trägt, dass dann geschlossen ist, wenn die Wasserversorgungsanlage in ihrem normalen Betrieb gehalten ist. Das zweite Ventil, und das damit dritte Ventil, wird in Abhängigkeit von der Dosierstelle betätigt. Es ist eine pragmatische und vorteilhafte Ausbildung der Erfindung, dass der mit dem zweiten Ventil nach dem Druckspeicherbehälter beginnende, die Dosierstelle tragende Rohrstang, in der Art eines By-Passes vor dem Ventil in die Saugleitung zurückgeführt wird.

Es ist auch vorteilhaft für die Erfindung, wenn am Ende des By-Passes eine Regelungseinrichtung in der Art eines Ventils angeordnet ist. Dadurch wird es möglich, die ausgebildete Dosierstrecke vor der Überleitung aus dem By-Pass in den zum Brunnen führenden Abschnitt der Saugleitung Sauerstoff einzuführen. Die Erfindung ist ausgeführt, wenn die Ventile der Rohrstrecke für die Sauerstoffeinspeisung und die Regelungseinrichtung für die Sauerstoffquelle mit einer Steuerung in einen Wirkzusammenhang versetzt werden. Es ist eine vorteilhafte Gestaltung der erfindungsgemäßen Lösung, dass die Längenbemessung der Dosierstrecke, gemessen von der Leitung am Ausgang der Dosierstelle bis in den Brunnen, der Verbindungszeit des Sauerstoffs und der Ausbildung seiner Feinperligkeit angepasst ausgebildet ist. Die Erfindung vorteilhaft vervollständigend, ist der Dosierstelle ein Sauerstoffblasenzähler vorgeordnet und mit deren Steuerung in einen Wirkzusammenhang versetzt.

Die Erfindung hat durch ihre konzeptionelle Lösung und ihre pragmatische Ausbildung signifikante technologische und wirtschaftliche Vorteile. Die Ausbildung der Vorrichtung sichert eine konzentrierte, energie- und apparativsparsame Verfahrensführung. Damit, dass die Rückführung des für die Reaktion im Boden benötigten Sauerstoff angereicherten Wassers über den normalen Druckspeicherbehälter erfolgt, ist ständig die Wassermenge gesichert, die ohne zusätzliche Energie und Fördereinrichtungen in den Boden zurückgeführt werden kann. Diese Fördermenge wird einer Dosierstelle zugeleitet, die kontinuierlich, mit konstantem Druck und vorbestimmter Menge Sauerstoff feinblasig gestaltet, während des Durchfließens in das Wasser einführt, um dann dem Brunnen direkt wieder zugeleitet zu werden, indem sich das mit Sauerstoff angereicherte Wasser in den wasserführenden Schichten des Bodens verbreiten kann und durch chemische sowie biologische Reaktionen eine Wasserreinigung sichert.

Es ist jetzt nicht mehr notwendig und einer der wesentlichen Vorzüge der erfindungsgemäßen Lösung das mit Sauerstoff anzureichende Wasser zeitweilig zu speichern, in einer Zwischenstufe zu behandeln und aus dieser in den Boden einzuspeisen. Die Dosierstelle, im wesentlichen als direkt arbeitende Dosiereinrichtung ausgebildet, gewährleistet durch eine neuartige Gestaltung eine hohe Kontinuität der Zuführung des Sauerstoffs in Bezug auf seinen Druck, seine Menge und seine Perlengestaltung. Das Gesamtkonzept der Einrichtung gestattet es, die eigentliche Dosierung in vorhandene, bereits funktionierende Wasserversorgungsanlagen einzubauen, ohne deren apparativen Umfang zu vergrößern bzw. mit den vorhandenen Räumlichkeiten in Kollision zu geraten. Vorrangig zu bemerken ist der erfindungsgemäße Vorteil, dass hier Sauerstoff mit einem annähernd 100 %igen Volumengehalt in periodisch benötigten Reaktionsmengen für eine Aufbereitung von Wasser bereitgestellt werden kann. Dabei bleibt die Wassermenge auf ein Minimum beschränkt, da die in einer Zeiteinheit geförderte Menge relativ gering und das durch sie transportierte Sauerstoffvolumen sehr groß ist.

Das erfindungsgemäße Verfahren, in einer Verwendung zum Aufbereiten von Wasser, insbesondere Trinkwasser, wird in einer zweiten, alternierenden Verwendungsart, mittels der in einer Wasserversorgungsanlage unerwünschte Beimengungen des Wassers, die als Eisen und Mangan vorliegen, in einem Filterreaktor, der mit Filtermaterial und daran angesiedelten Mikroorganismen bestückt ist, entfernt werden, zur Durchführung gebracht. Das aufzubereitende Rohwasser wird in dem Filterreaktor mit dem Filtermaterial und den Mikroorganismen in einen intensiven Kontakt gebracht, wobei vor dem Filterreaktor mit dem Sauerstoffdosiergerät das Rohwasser während des Durchströmens kontinuierlich, mit feinstverteiltem Sauerstoff gesättigt und dem Filterreaktor durchströmend zugeführt wird. Bei Erreichen eines Differenzdruckes, ausgelöst durch eine Verunreinigung des Filterreaktors, wird die Förderpumpe der Wasserversorgungsanlage während der wasserverbrauchsfreien Nachtstunden ausgeschaltet und ein Rückspülen zum Säubern des Reaktors aus einem mit gereinigtem Wasser gefüllten Speicherbehälter der Wasserversorgungsanlage durchgeführt.

Das Verfahren, in der alternierenden Ausgestaltung mit einem einzelnen Filterreaktor durchgeführt, ist kontinuierlich arbeitend in einer entsprechenden Einrichtung eingebunden. Die erfindungsgemäße Lösung ausgestaltend, ist das Verfahren mit zwei und mehr Filterreaktoren durchzuführen, die parallel geschaltet sind und damit eine höhere Durchsatzleistung für die Aufbereitung gewährleisten. Nach einer erfindungsgemäßen Ausbildung wird der Druckspeicherbehälter außerhalb des Rückspülvorganges als Versorgungsbehälter für Brauchwasser, der von den Benutzern der Wasserversorgungsanlage angesprochen wird, ausgebildet. Gemäß einer bevorzugten Ausbildungsform der erfindungsgemäßen Lösung erfolgt die Rückspülung in den Filterreaktoren mit dem aus dem Druckspeicherbehälter der Wasserversorgungsanlage mit dem Eigendruck des Speichers, der im Arbeitsprozess der Anlage normalerweise im Speicher aufgebaut wird. Der Rückspülvorgang wird dann eingeleitet, wenn die obere Grenze des Eigendruckes im Druckspeicherbehälter erreicht worden ist. Das Verfahren wird in einer Einrichtung durchgeführt, die mindestens einen Filterreaktor aufweist, in den Filtermaterial eingegeben worden ist, auf dem sich Mikroorganismen ansiedeln, die einen biologischen Abbauprozess des zu entfernenden Eisens und Mangans im Filterreaktor vornehmen, an dessen Zuflussseite eine Sauerstoffdosiereinrichtung zum Anreichern des Rohwassers mit Sauerstoff eingefügt und dem Filterreaktor eine Rückspüleinrichtung beigegeben ist, die mit einem Druckspeicherbehälter verbunden ist, aus dem bei abgeschalteter Pumpe das Brauchwasser mit dem Druck des Druckspeicherbehälters für den Rückspülvorgang in den Reaktor eingeleitet wird.

Die Erfindung ist vorteilhaft ausgebildet, wenn der Druckspeicherbehälter der Speicherbehälter der Wasserversorgungsanlage ist. Die erfindungsgemäße Lösung ist dabei variierbar, wobei vorteilhafterweise die Einleitung des aufzubereitenden Wassers aus dem Speicherbehälter von oben in den Filterreaktor erfolgen kann, dabei wird an seiner Unterseite das Wasser aus der Rückspülung abgeführt. Variierend mit gleichem erfindungsgemäßen Effekt wird das Rückspülwasser an der unteren Seite des Filterreaktors mit Druck eingeführt und verlässt den Filterreaktor an seiner oberen Seite. Die Erfindung ist ausgeführt, wenn die Sauerstoffdosiereinrichtung in die Druckleitung für das Rohwasser vor dem Filterreaktor eingeordnet ist. Dabei ist es aus erfinderischer Sicht vorteilhaft, dass der Filterreaktor übererdig angeordnet, jedoch der Wert der Erfindung nicht eingegrenzt ist, wenn der Reaktor unterirdisch eingefügt ist. Das Verfahren wird vorteilhaft in einem Filterreaktor durchgeführt wird, wobei bei gleichen Verfahrensschritten auch mindestens zwei Filterreaktoren parallel geschaltet angeordnet sein können. Es ist eine Ausführungsform der Erfindung, bei einer Anordnung von mehreren Filterreaktoren jedem Reaktor eine Dosierstelle mit einer Dosiereinrichtung für die Zuführung von Sauerstoff in seiner Rohwasserdruckleitung zuzuordnen.

Die erfindungsgemäße Lösung ist dadurch ausgebildet, dass der Druckspeicherbehälter ein Membranbehälter ist. Die Erfindung in der alternierenden Stufe weist sowohl verfahrenstechnisch als auch in ihrer apparativen Ausgestaltung bemerkenswerte Vorteile auf. Durch die überirdische Anordnung ist es möglich, einen kontrollierten Reinigungsvorgang des Wassers vorzunehmen. Das betrifft die Einspeisung des für den Reinigungsvorgang unerlässlichen Sauerstoffs mit einem Konzentrationsgrad und einer ausgeprägten Feinperligkeit in die Rohwasserleitung. Das Dosiergerät der ersten Stufe versorgt das Rohwasser, welches dem oder den Filterreaktoren zugeführt wird, mit einem den Abbauvorgang hochstimulierenden feinperligen Sauerstoff hoher Konzentration und lässt dadurch eine Beschleunigung des chemischen sowie des biologischen Abbauprozesses in den Filterreaktoren zu. Die Einführung von behandeltem Brauchwasser aus dem Druckspeicherbehälter für die Durchführung des Rückspülvorganges in den Filterreaktoren ist für sich bereits eine völlig neuartige Lösung auf dem Gebiet der Wasserreinigung von Eisen- und Mangananteilen. Einher geht dieser Vorteil, sich noch erhöhend damit, dass das zur Verfügung stehende Rückspülwasser dem oder den Filterreaktoren aus einem in einer normalen Wasserversorgungsanlage bereits zur Verfügung stehenden Druckspeicherbehälter zurückgeführt wird. Der Druckspeicherbehälter weist dabei einen Druck auf, der wenig oder gar nicht von der oberen Grenze des Betriebsdruckes abweicht. Dabei wird die Förderpumpe abgeschaltet und die Zuführung von Wasser aus dem Brunnen gestoppt. Der Reinigungsprozess wird jetzt ohne die Gefahr einer erneuten Verschmutzung des Filtermaterials im Filterreaktor sowie einer Verseuchung der darin angesiedelten Mirkoorganismen über ein Rückspülen vorgenommen. Das aus dem Rückspülprozess anfallende Wasser ist biologisch aufbereitbar und kann damit einer normalen Wasserentsorgungseinrichtung sowie einem Abwasserkanal, einer Klärgrube oder einem Abwasserbehälter zugeführt werden, ohne deren Funktion zu beeinträchtigen. Die apparative Ausbildung des Aufbereitungsteiles in der normalen Wasserversorgungsanlage, unter Einbeziehung ihrer Funktionsteile, vor allem deren Druckspeicherbehälter, weist den Vorzug auf, dass der eigentliche Reinigungsprozess ohne jeden zusätzlichen energetischen Aufwand betrieben wird. Im Filterprozess gelangt das Rohwasser über die Sauerstoffdosiereinrichtung, mit Sauerstoff angereichert, in den oder die Filterreaktoren, wird gereinigt, gelangt in den Druckspeicherbehälter und im Normalbetrieb in den Wasserverbraucherkreislauf. Für den Rückspülvorgang wird die Förderpumpe abgestellt, wenn der größte Betriebsdruck im Brauchwasser erreicht ist, und die Filterreaktoren einen entsprechenden Verschmutzungsgrad signalisieren. Dann wird die Zuführung der Rohwasserleitung geschlossen und gleichzeitig der freie Auslauf geöffnet, so dass mit dem bereits gereinigten Wasser aus dem Druckspeicherbehälter die Filterreaktoren durch Rückspülung gereinigt werden. Das Verfahren sowie die Einrichtung bedingen für die Verfahrensschritte und die Einrichtungsfunktion keine zusätzlichen apparativen Aufwendungen, um das Rohwasser im Sinne des Verfahrens zu reinigen und die Filterreaktoren für einen stetigen Aufbereitungsprozess bereitzuhalten.

Die Erfindung soll anhand eines Ausführungsbeispieles näher erläutert werden. In der zugehörigen Zeichnung zeigen:
- Fig. 1:: Die Einrichtung, in einem Gehäuse, eingetaucht in ein durchfließendes Brauchwasser;
- Fig. 2:: Die Anordnung der Einrichtung in einer Rohrleitung mit vorgeordnetem Blassenzähler sowie einer Gasquelle;
- Fig. 3:: Die Einrichtung zum Behandeln von Wasser und Verwendung der Vorrichtung gemäß Fig. 1 in einer schematischen Darstellung;
- Fig. 4:: Die Einbindung einer Blasenzählereinrichtung vor einer Dosierstelle;
- Fig. 5:: Die Verwendung der Einrichtung nach Fig. 1 in einer zur Fig. 3 alternierend ausgebildeten Einrichtung zur Aufbereitung von Wasser mit Einbindung eines Filterreaktors;
- Fig. 6:: Die Einrichtung nach Fig. 5 mit zwei Filterreaktoren.

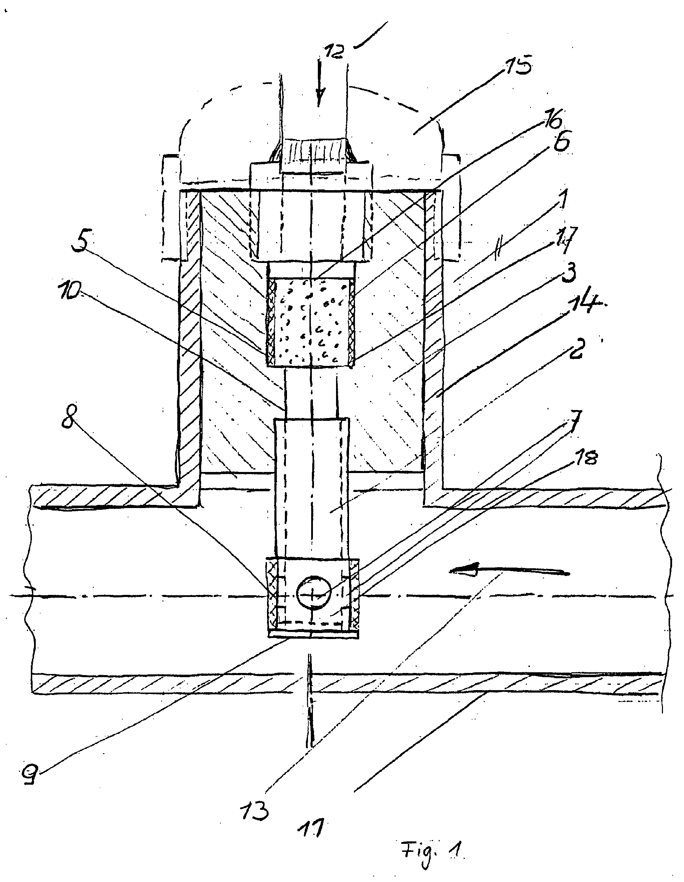

Fig. 1 zeigt die Dosiereinrichtung 1 in einer Vorderansicht im Schnitt. Die Dosiereinrichtung 1 ist hier umgekehrt T-förmig ausgebildet, wobei der waagerechte Strang 11 der Vorrichtung 1 in Richtung eines Pfeils 13 von einem flüssigen Medium, beispielsweise einem Brauchwasser, durchflossen ist. Vertikal auf die Längsmittenachse des waagerechten Stranges 11 gerichtet, ist ein Dom 14 aufgesetzt, der an seinem oberen Ende eine Verschlusskappe 15 trägt, in den ein Sauerstoffeinlass 12 eingearbeitet ist. In den Dom 14 ist ein Einsatz 3 eingebracht, der eine zentrische Bohrung trägt, die mit einem Zwischenstück 10 verjüngt ist, an dem sich anpassend eine lanzettenartige Führung 2 anschließt, welche eine durchgehende Innenbohrung trägt. Am äußeren Ende der lanzettenartigen Führung 2 ist eine Auslassöffnung 7 eingearbeitet. Die Auslassöffnung 7 kann aus einer oder mehreren, gleichmäßig oder ungleichmäßig, radialgerichteten Bohrungen gebildet sein. Die durchgehende Innenbohrung der lanzettenartigen Führung 2 ist mit einem Stopfen 9 oder einer ähnlichen Verschlussmöglichkeit versehen. Im Bereich der Auslassöffnung 7 ist die lanzettenartige Führung 2 mit einer Manschette 8 umschlossen, welche die Auslassöffnungen 7 und Partien der Außenflächen der lanzettenartigen Führung 2, deren Auslassöffnungen 7 verschließend, fest, jedoch kraftschlüssig haftend aufgebracht ist. Über der lanzettenartigen Führung 2 ist im Einsatz 3, dem Sauerstoffeinlass 12 zugewendet, ein Dosiermittel eingesetzt. Das Dosiermittel ist ein Diaphragma 6 mit äußerst feinporiger Struktur. Das Diaphragma 6 ist mittels eines seine parallel zur Längsmittenachse verlaufenden Außenflächen bedeckenden Führungsgummis 5 fest im Einsatz 3 eingefügt und ruht mit seiner unteren Übergangsseite auf einem Absatz, der als Eindrehung eines Zwischenstückes 10 ausgebildet ist. Die Eingangsseite des Diaphragmas 6 ist gegen den Einlass 12 des Sauerstoffs gerichtet, der über eine Leitung mit hohem Transportdruck auf dem Diaphragma 6 aufliegt und es in Richtung der lanzettenartigen Führung 2 durchdringt. Dabei wird das Gas, hier Sauerstoff, feinperlig aufgeteilt und auf einen konstanten Druck eingestellt. Das jetzt konditionierte Gas strömt von der Übergangsseite 17 des Diaphragmas 6 durch die Innenbohrung der lanzettenartigen Führung 2 zu der Überleitungsstelle 18 und presst sich in die Auslassöffnungen 7. Die fest anliegende Manschette 8 wird im Bereich der Auslassöffnungen 7 axial unter Druck gesetzt und der äußerst feinperlige Sauerstoff überwindet den Kraftschluss zwischen Manschette 8 und Außenwand der Führung und verlässt ihn durch den entstehenden weniger als haarfeinen Spalt. Da die Anpresskraft der Manschette 8 und seine Anlagefläche konstant bleiben, wird der spezifische Druck, der zum Diffundieren des Sauerstoffs durch den Spalt führt, nochmals relativiert, gleichmäßig eingestellt und konstant gehalten. Die lanzettenartige Führung 2 ist an ihrer unteren Stirnseite mit einem Verschlussstück, in der Art eines Stopfens 9, verschlossen. Die in das Wasser eingetauchte Lanzette ist damit gegen ein Eindringen des vorbeifließenden, mit Gas zu versetzenden Wassers verschlossen und die darin enthaltenen Schwebestoffe können nicht in den Bereich des Diaphragmas 6 gelangen und dessen Poren verstopfen. Durch diese Maßnahme ist eine lang anhaltende Funktionstüchtigkeit der Einrichtung gewährleistet.

Fig. 2 zeigt die Möglichkeit, einen Sauerstoffblasenzähler 21 in der Leitung 20;22 zwischen der Sauerstoffquelle 19 und der Dosiereinrichtung 1 einzuordnen, um die Menge Sauerstoff bewusst dosiert der Dosiereinrichtung 1 zuzuleiten, die in der Leitung 23;24 angeordnet ist. Der mitlesende Fachmann erkennt, dass die Leitung 23 in Richtung des Pfeils 13 das flüssige Medium in die Dosiereinrichtung 1 einspeist, welche es mit der Leitung 24 wieder verlässt. Die Einordnung des Blasenzählers 21 vor der Dosiereinrichtung 1 in die Leitungen 20;22 gewährleistet eine bereits sichere Regulierung der zugeführten Gasmenge, die in der Dosiereinrichtung 1 konditioniert wird.

Eine Einrichtung zur Durchführung des Verfahrens zeigt unter Einbeziehung der verfahrensgemäß anzuwendenden Einrichtung gemäß Fig. 1 die Konzeption einer Wasserversorgungsanlage mit eingeordneter Sauerstoffdosierung für das in den Brunnen 30 über die Saugleitung 38 zurückzuführende, mit Sauerstoff angereicherte Brauchwasser. Der Brunnen 30 ist über eine Saugleitung 38;38" mit einer Pumpe 6 verbunden, die über weiterführende Leitungen 38" das aus dem Brunnen 30 geförderte Wasser mit einem Druckspeicherbehälter 23 drückt. Der Druckspeicherbehälter 23 weist an seiner Ausgangseite eine Brauchwasserzuleitung 32 auf, die in das Brauchwassernetz bei 31 einmündet. Mit der Brauchwasserzuleitung 32 ist eine Leitung 40 verbunden, in die ein Ventil 27 eingeordnet ist. Die Leitung 40, mit einer Dosierstelle 1 verbunden, als Dosiereinrichtung ausgebildet, und an einer Rückführungsleitung 40 angeschlossen, ist, gesehen aus der Saugrichtung der Pumpe 6, über die Saugleitung 38;38' zwischen dem Brunnen 30 und dem Ventil 28 in die Saugleitung 38 eingebunden. Die Dosierstelle 1 ist über eine Sauerstoffzuführung 39 mit einer Sauerstoffquelle 34 verbunden, der ein Ventil 35 im unmittelbaren Bereich der Sauerstoffquelle 18 beigeordnet ist. Das Ventil 27 und die Pumpe 6 sowie das Ventil 29 sind über Steuerleitungen 35;36;37 mit einer Steuerung 33 verbunden, deren Betätigung in einem bestimmten Wirkzusammenhang der Verfahrensführung von dort ausgelöst wird. Im Normalbetrieb der Wasserversorgungsanlage wird der Druckspeicherbehälter 25 mit der Förderpumpe 6 aus dem Brunnen 30 über die Saugleitung 38;38' gefüllt und unter Druck gesetzt. Das von den Verbrauchern angeforderte Wasser wird über die Brauchwasserzuleitung 32 bei 31 in das normale Brauchwassernetz eingespeist. Ein Ventil 28 ist für eine Strömungsrichtung gegen die Pumpe 6 geöffnet bzw. hält bei Stillstand der Pumpe 6 in einer Rückschlagwirkung das in dem Behälter 25 unter Druck stehende Wasser, damit es nicht in den Brunnen 30 zurückfließt. Das Ventil 28 ist federbelastet. Durch die Steuerung 33 wird zur Einleitung eines Rückführungsvorganges des Wassers für seine zyklische Initiierung eines Aufbereitungsvorganges im Boden des Umgebungsfeldes des Brunnens 30, die Pumpe 6 angeschaltet und das Ventil 28 gegen die Federwirkung und den Rückführungsdruck des Wassers in der Leitung 38' geschlossen. Das Ventil 27 wird geöffnet und die Dosierstelle 1 mit Sauerstoff aus der Sauerstoffquelle 19 nach Öffnen des Ventils 27 über die Sauerstoffzuführung 39 mit Gas versorgt, das feinperlig in das aus dem Druckspeicherbehälter 25 über die Leitung 40 zuströmende Wasser, das jetzt hochgradig mit Sauerstoff angereichert ist, kann in die Leitung 38 gelangen, fließt dann dem Brunnen 30 zu, um sich zur Auslösung von chemischen sowie biologischen Aufbereitungsvorgängen zum Ausfällen von Eisen und Mangan in der Umgebung des Brunnens 30 im Boden zu verteilen.

Fig. 4 zeigt die Möglichkeit, einen Sauerstoffperlenzähler 41 in der Leitung 38 zwischen der Sauerstoffquelle 19 und der Dosierstelle 1 einzuordnen, um die Menge Sauerstoff bewusst dosiert der Dosierstelle 1 zuzuleiten, die in den Leitungen 40 angeordnet ist.

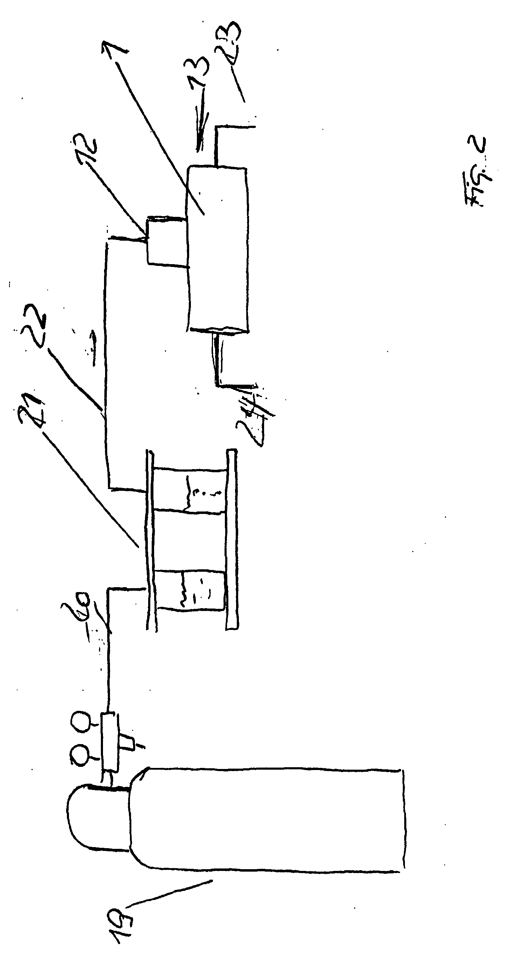

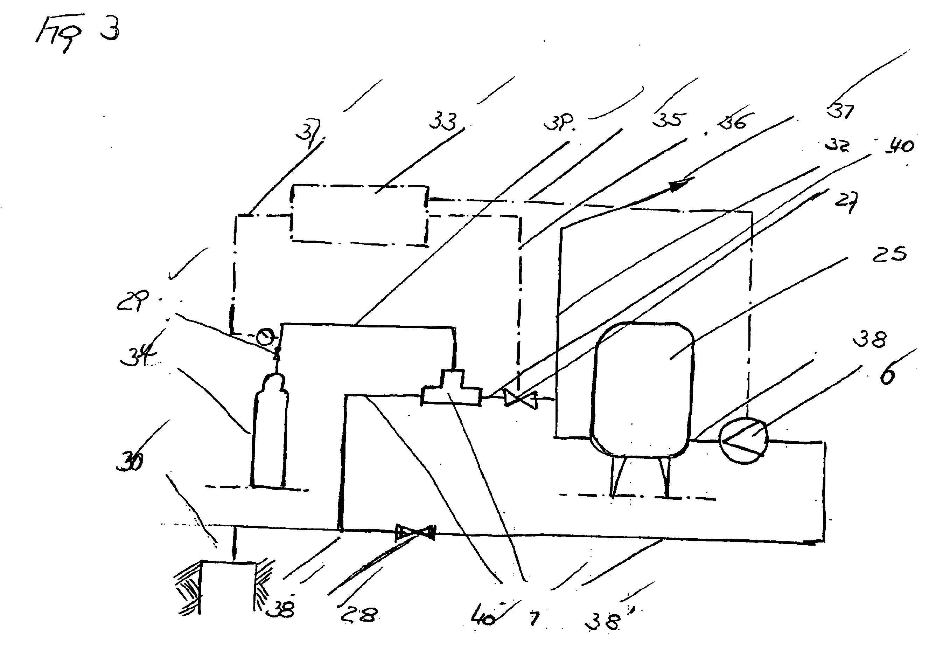

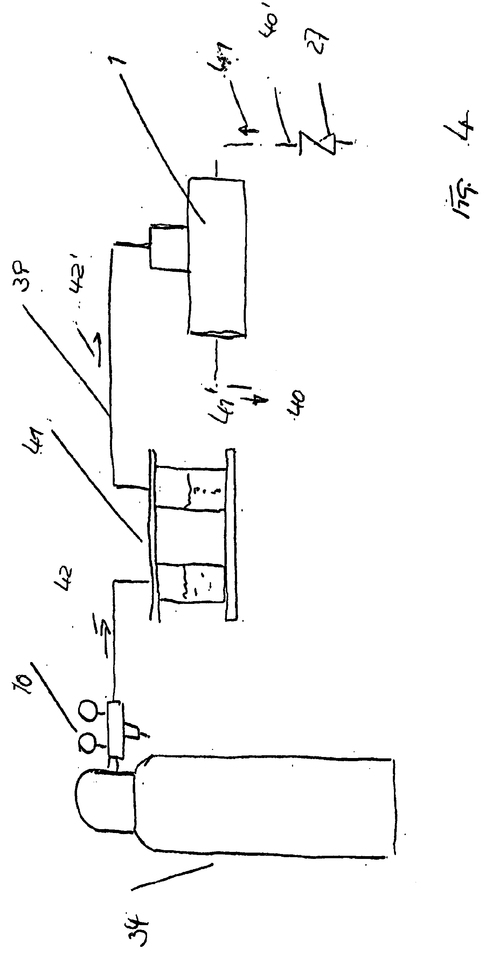

Der mitlesende Fachmann erkennt, dass die Leitung, als Dosierstrecke ausgelegt, die hinter der Dosierstelle 1, beginnend mit der Leitung 40, in die Leitung 38 übergehend, den Brunnen 30 einschließend, den Kontakt des mit Sauerstoff konditionierten Wassers im Brunnen 30 herstellt. Das Verfahren kann dadurch erfüllt sein, dass die Dosierstrecke im Bereich der Leitung 40 mit durch den Fachmann bekannte Rohrschleifen, die mäander- oder spiralförmig ausgebildet sind, bewusst verlängert werden kann, um die Reaktionszeit und Einbindungsmöglichkeit des Sauerstoffs in das rückzuführende, die Reaktion auslösende Brauchwasser zu verbessern. In der Verfahrensführung wird die Pumpe 6 durch die Steuerung aus dem Betrieb genommen, wenn das Ventil 27 geöffnet und das im Druckspeicherbehälter 25 unter Druck gespeicherte, über die Leitung 40 durch die Dosierstelle 1 hindurchfließende Wasser in den Brunnen 30 gefördert wird. Die Förderung erfolgt ohne eine mechanische Einrichtung, nur über den Eigendruck des Druckspeicherbehälters 25, dem dabei die Funktion einer Mengenbegrenzungseinrichtung zugeordnet wird. Kommunizierend mit der Dosierstelle 1 wird die dosierte Menge des Wassers mit Sauerstoff angereichert, zyklisch in den Boden zum Eintrag gebracht und die gewünschten Reaktionen der Oxidation und des biologischen Abbaus ausgelöst. Die außerordentlich effektive Funktionsweise der Dosierstelle 1 gestattet es, bei allen Ausführungsarten der Rückführung des Wassers in den Brunnen 30 auch bei einer bewusst verlängerten Dosierstrecke eine kontinuierliche, ohne Zwischenspeicherung erfolgende Rückführung des Wassers in den Boden zur Initiierung der Abbaureaktionen zu erreichen. Die Einrichtung gemäß Fig. 5 besteht aus einem Filterreaktor 43, der als alternierende Möglichkeit zur Entfernung von unerwünschten Beimengungen unter Verwendung der Vorrichtung gemäß Fig. 1 mit einem Brunnen 30 und einem Druckspeicherbehälter 23 über Rohrleitungen in Verbindung gebracht ist. Der Brunnen 30 speist eine Saugleitung 38, die über ein Ventil 4, als Rückflussverhinderer ausgebildet, mit einer Pumpe 6 verbunden ist. Die Pumpe 6 ist mit einer Pumpensteuerung in Verbindung gebracht und über eine Leitung 45 mit einem weiteren Ventil 61 verbunden. Die Rohrstrecke der Leitung 45 führt nach dem Ventil 61 zu einer Dosierstelle 1. Eine Leitung 46' verbindet diese mit dem Filterreaktor 43, in den sie mit der Leitung 47" eingebunden ist. Die Leitung 46 wird über dem Filterreaktor 43 zu einem Magnetventil 68 weitergeführt, das an seiner der Leitung 45 entgegenliegenden Seite einen freien Auslauf 48 aufweist. An der Unterseite des Filterreaktors 43 ist eine Leitung 49 eingebunden, die über den Strang 50 zu einem Ventil 61 führend, mit einem Strang der Leitung 50 weitergeleitet, zu einem Druckspeicherbehälter 23 gelangt und im Leitungsstrang 51 in die Brauchwasserleitung einmündet. Die Dosierstelle 1 ist über eine Leitung 53 mit einem Ventil 69 verbunden, das über den Strang der Leitung 54 mit einer Sauerstoffquelle 34 verbunden ist. Eine Steuerung 33 ist über eine Leitung 55 mit der Steuerung 33 der Pumpe 6 in einen Kontakt gebracht, und das Ventil 68 vor dem freien Auslauf 48 über dem Filterreaktor 43 mit der Leitung 56 in Verbindung. Selbstverständlich verfügt die Steuerung 33 über einen Netzanschluss zur Einspeisung der Steuerenergie. Die Pumpe 6 wird über die Steuerung 44 aktiviert und fördert über die Saugleitung 38 Rohwasser aus dem Brunnen 30 in Richtung der Dosierstelle 1, der vorlaufend auf dem Strang der Leitung 45 ein Ventil 67 mit einem Druckmesser 52 zugeordnet ist. Das Ventil 68 ist geöffnet und über die Dosierstelle 1 wird das aus dem Brunnen 30 geförderte Rohwasser mit Sauerstoff in der gemäß dem Verfahren notwendigen Konzentration und Menge bis zur Absättigung versetzt. Es wurde gefunden, dass die Dosierstelle 1 den Sauerstoff hochkonzentriert, feinperlig und chemisch sowie biologisch verwendbar in das Rohwasser direkt einspeist. Über den Strang der Leitung 46 wird das jetzt mit Sauerstoff gesättigte Rohwasser über die Leitung 47 von oben in den Filterreaktor 43 eingeführt. Über die Leitung 51 verlässt das gefilterte und biologisch behandelte Wasser als Brauch- oder Reinwasser den Filterreaktor 43 und gelangt über die Leitung 51 in den Druckspeicherbehälter 23, der gefüllt wird, und das Wasser über den Strang der Leitung 51 in die Brauchwasseranlage einführt.

Die Pumpensteuerung 44 ist mit der Steuerung 33 über die Leitung 55 in eine Wirkverbindung gebracht. Die Leitung 56 verbindet die Steuerung 33 mit dem Ventil 69, das die Zufuhr des Sauerstoffs aus der Sauerstoffquelle 34 zur Dosierstelle 1 regelt. Eine Steuerleitung 56 verbindet das Ventil 68 am Strang 46 mit der Steuerung 33. Bei einem Förderungsprozess des Rohwassers für eine Verwendung als Brauchwasser, wird dieses aus dem Brunnen 30 über die Pumpe 6 durch die Dosierstelle 1 sowie die Leitung 46;47 in den Filterreaktor 43 gefördert, durchläuft ihn in einer bestimmten Reaktionszeit und wird dort von unerwünschten Beimengungen gereinigt. Das gereinigte Wasser gelangt über die Leitung 49 zum Druckspeicherbehälter 23 und über die Leitung 50 in die Brauchwasserverteilungsanlage. Der Filterreaktor 43 arbeitet kontinuierlich. Für seine zyklische oder nach Bedarf azyklische Reinigung wird über einen Impuls der Steuerung 44 die Pumpe 6 über die Pumpensteuerung 44 abgeschaltet und das Ventil 68 geöffnet. Dadurch fließt nach Öffnen des Ventils 61 das im Druckspeicherbehälter 23 unter Druck stehende Brauchwasser über die Leitung 49;50 in den Reaktor 43 von unten unter Druck nach oben ein und säubert diesen in einer Rückspülung. Das durch die Rückspülung verunreinigte Brauchwasser gelangt über das jetzt durch einen Kontakt der Steuerung 33 über die Leitung 56 geöffnete Ventil 68 in einen freien Auslauf 48, über den das verunreinigte Wasser in die normalen Abflusseinrichtungen, wie Kanalsysteme, Sickergruben, Absetzbecken etc., ohne Schwierigkeiten eingeführt werden kann.

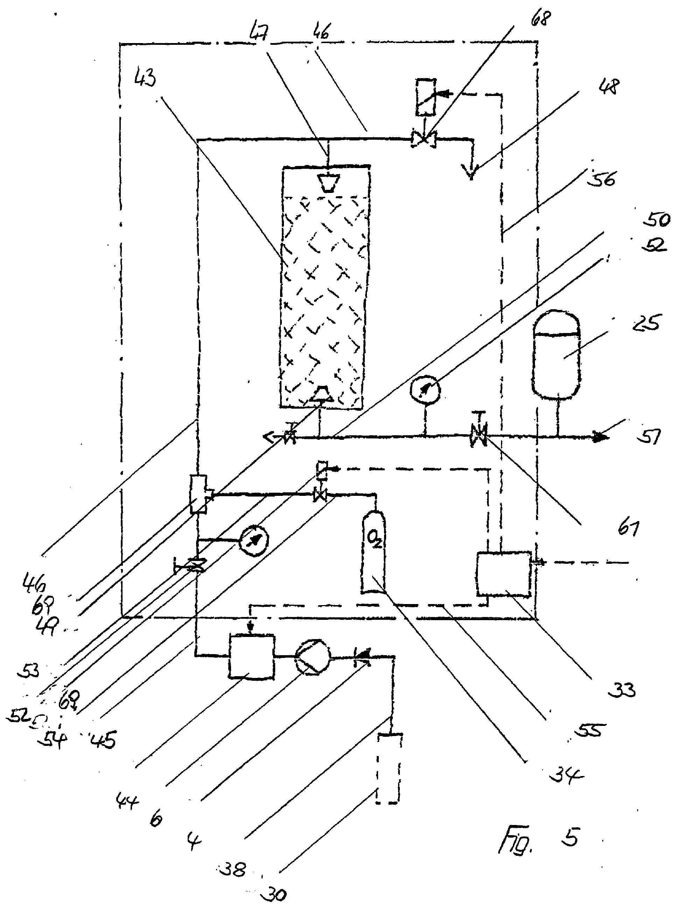

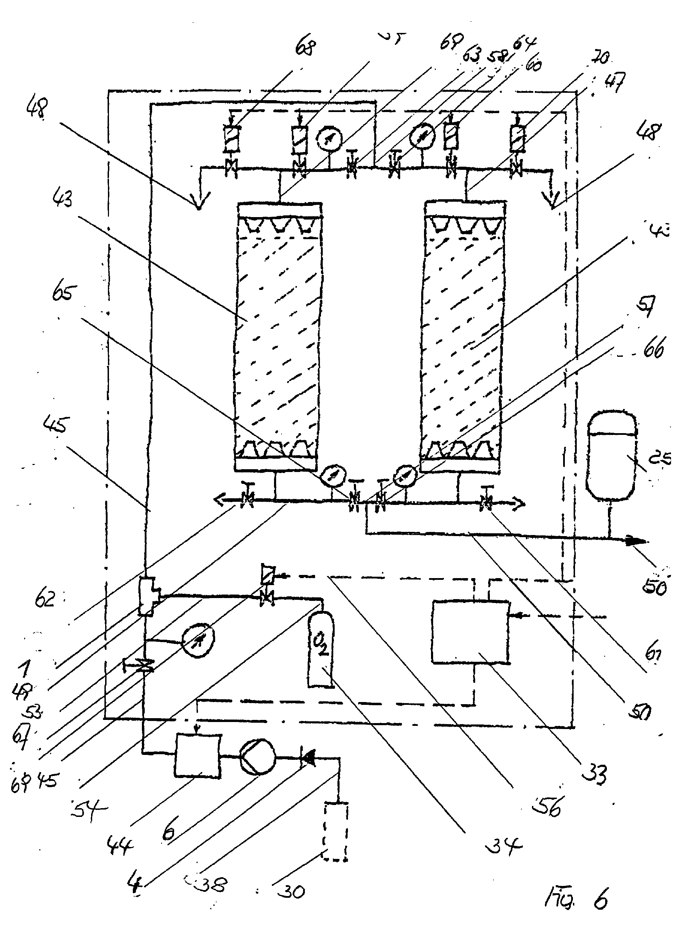

Fig. 6 zeigt die Einrichtung in einer erfindungsgemäßen Form mit zwei parallel geschalteten Filterreaktoren 43;43'. Beide Reaktoren 43;43' sind in der gemäß Fig. 3 dargestellten Anordnung mit einer Dosierstelle 1 über eine Leitung 46 verbunden, die das durch die Pumpe 6 aus dem Brunnen 30 geförderte Rohwasser hochkonzentriert mit Sauerstoff versetzt in die Filterreaktoren 43;43' durch die Leitungen 47 von oben einführen. Das mit Sauerstoff angereicherte Rohwasser durchläuft die Filterreaktoren 43;43', in denen es von unerwünschten Beimengungen befreit wird. Über eine Verbindung 57 zusammengeführt, gelangt das jetzt behandelte Wasser, als Brauch- oder Trinkwasser vorliegend, in den Druckspeicherbehälter 23, der mit einer Leitung 51 kommunizierend, das Brauchwasser in die Verästelungen der Verbraucherstellen der Wasserversorgungsanlage führt. Für die Verfahrensführung des Filterns mit dem Einlauf des konditionierten Rohwassers von oben sind die Ventile 63;64 gleichermaßen wie die Ventile 59;60 geöffnet. Die Ventile 68;70 sind geschlossen, ebenso die an der Unterseite befindlichen Ventile 61;62, wogegen die Ventile 65;66 geöffnet sind und das gefilterte Brauchwasser über die Leitung 49 seinem jeweiligen Verbraucher zugeführt werden kann. Wenn durch die Filterfunktion über den Filterreaktoren 43;43' ein bestimmter festzulegender Differenzdruck erreicht ist, wird über die Steuerung 33 zur Reinigung der Rückspülvorgang eingeleitet. Dies geschieht prinzipiell nur wechselweise, d. h. mindestens ein Filterreaktor bleibt immer in Funktion, während bei dem zu reinigenden Filter das Zulaufventil 59 bzw. 60 geschlossen wird und dann gleichzeitig das Rückspülventil 68 bzw. 70 geöffnet wird. Damit kann im Bedarfsfall der Pumpbetrieb aufrechterhalten bleiben und sorgt somit für den nötigen Systemdruck zur Rückspülung oder das aus dem Druckspeicherbehälter 23 zurückdrückende Brauchwasser steigt über die Leitungen 49;50 in die Filterreaktoren 43;43' und spült die darin eingelagerten Rückstände heraus. Das aus der Rückspülung ausfallende Druckspülkonzentrat wird über die Leitungen 48;48', die geöffneten Ventile 68;70 passierend, wie bereits in Fig. 3 angegeben, normalen Wasserabflusseinrichtungen, wie Kanälen etc., zugeführt. Es ist auch möglich, das Rückspülkonzentrat von Eisen- und Mangananteilen fraktioniert zu entsorgen und diese Anteile einer weitere Verwendung zuzuführen.

Die erfindungsgemäß in den Figuren 5 und 6 dargestellte Ausführungsform der Einrichtung zur alternierenden Durchführung des Verfahrens unter Verwendung der Vorrichtung gemäß den Figuren 1 und 2 lässt umfassend erkennen, dass hier durch die Konzentration der Teileinrichtungen geringe Dimensionierungen der Einrichtung erreicht werden und damit ihr müheloses Einordnen in die Räumlichkeiten bestehender Wasserversorgungsanlagen erfolgen kann. Die Ausnutzung des Funktionsdruckes der Wasserversorgungsanlagen über den Druckspeicherbehälter 23 lässt eine Verfahrensdurchführung mit geringem energetischen Aufwand als abgesichert erkennen. Weiterhin ist es ein erheblicher Vorteil bei einer neuartigen Konstruktionsform derartiger Aufbereitungsanlagen, dass die Filterreaktoren 43;43' mit dem Druckspeicherbehälter 23 über eine sie verbindende Leitung 49;50 wechselseitig zum Führen des behandelten Wassers zum Druckspeicherbehälter 23 und im Umkehrungsprozess für die Rückführung des behandelten Wassers aus dem Druckspeicherbehälter 23 in die Filterreaktoren 43;43' für die Durchführung des Rückspülprozesses in einen Wirkzusammenhang gebracht sind und dabei auch beim Rückspülvorgang die Funktionsfähigkeit der Brauchwasseranlage gewährleistet ist. Gemäß den Ausführungen in den Figuren 5 und 6 leitet die Dosierstelle 1 über eine neuartige Ausbildung der Dosiervorrichtung hochkonzentriert, druck- und mengenmäßig gleichmäßig gehaltenen feinperligen Sauerstoff in die zu den Filterreaktoren 43;43' führenden Leitungen. Die Dosiervorrichtung an der Dosierstelle 1 ist so ausgebildet, dass sie durch das vorbeifließende, unbehandelte mit Beimengungen verunreinigte Rohwasser nicht in ihrer Funktionstüchtigkeit beeinflusst wird und mit einer hohen Funktionssicherheit und ―dauer den Betrieb der Anlagen gewährleistet.

### Aufstellung der verwendeten Bezugszeichen

- 1: Dosiereinrichtung
- 2: lanzettenartige Führung
- 3: Einsatz
- 4: Ventil
- 5: Führungsgummi
- 6: Pumpe
- 7: Auslassöffnung
- 8: Manschette
- 9: Stopfen
- 10: Zwischenstück
- 11: Strang
- 12: Sauerstoffeinlass
- 13: Durchflussrichtung
- 14: Dom
- 15: Verschlusskappe
- 16: Eingangsseite
- 17: Übergangsseite
- 18: Überleitungsstelle
- 19: Sauerstoffquelle
- 20: Leitung
- 21: Blasenzähler
- 22;23;24: Leitung
- 25: Druckspeicherbehälter
- 26 27;28;29: Ventil
- 30: Brunnen
- 31: Brauchwassernetz
- 32: Brauchwasserzuleitung
- 33: Steuerung
- 34: Sauerstoffquelle
- 35 35;36;37: Steuerleitung
- 38;38': Saugleitung
- 39: Sauerstoffzuführung
- 40;40': Rückführungsleitung
- 41: Blasenzähler
- 41;';41": Richtungspfeil
- 42;42': Richtungspfeil
- 43;43': Filterreaktor
- 44: Steuerung
- 45;46;47: Leitung
- 48;48': Auslauf
- 49;50;51: Leitung
- 52: Druckmesser
- 53;54: Leitung
- 55;56: Leitung
- 57;58: Verbindung
- 59;60: Ventil
- 61;62: Ventil
- 63;64: Ventil
- 65;66: Ventil
- 67;68;69;70: Ventil

## Patentansprüche

1. Verfahren zur Aufbereitung von Wasser unter Verwendung von stufenlos-, mengen- und druckreguliert darin eingetragenem Gas sowie dessen Anwendung beim Aufbereiten aus dem Boden geförderten Wassers einschließlich eines Entfernens von unerwünschten Beimengungen, **dadurch gekennzeichnet, dass** Gas stufenlos, mengen- und druckreguliert in ein flüssiges Medium, insbesondere Wasser, unter Verwendung eines in eine Halterung eingeordneten porigen Dosiermittels, dem an seiner Eingangsseite ein Gas mit hohem Druck zugeführt, eingetragen wird, das im Dosiermittel während seines Durchfließens druckgemindert, reguliert und feinblasig strukturiert, in seiner Menge dosiert, an dessen gegenüberliegender Übergangsseite austretend, einer Überleitungsstelle zugeführt, in der das Gas nochmals druckreguliert, in das vorbeiströmende flüssige Medium zum Einfließen gebracht wird, die einen Verschluss aufweist, mit der das Dosiermittel vor einer Benetzung des flüssigen Mediums bewahrt wird, das als aus dem Boden gefördertes und mit dem Gas behandeltem angereicherten Wasser, insbesondere Trinkwasser, ansteht und zum Entfernen von als Eisen und Mangan vorliegenden Beimengungen über eine Rückführung des durch die Behandlung beeinflussten Wassers in den Boden, mit einer in der Richtung wechselweisen Verwendung mindestens eines Teiles der zum Brunnen führenden Saugleitung und des Brunnens, wobei ein Druckspeicherbehälter zum Speichern des Wassers mit einer Saugleitung verbunden, eine Ableitung aufweist, mit der über eine Abzweigung nach dem Öffnen eines Ventils das aus dem Druckspeicherbehälter geführte Wasser einer Sauerstoffdosierstelle zugeleitet, über die dem Wasser feinperlig Sauerstoff zugeführt wird, das über eine Einspeisung in die Saugleitung über den Brunnen unter dem gleichen Druck wie in dem Druckspeicherbehälter, dessen Speichermenge folgend, in den Boden gefördert wird.

2. Verfahren zum Aufbereiten von Wasser, insbesondere von Trinkwasser, in einer Wasserversorgungsanlage durch Entfernen von Beimengungen, als Eisen und Mangan vorliegend, in einem Filterreaktor, der mit Filtermaterial gefüllt und daran angesiedelten Mikroorganismen bestückt ist, die mit dem aufzubereitenden Rohwasser in einen intensiven Kontakt gebracht werden, und mit einem vor dem Filterreaktor eingeordneten Sauerstoffdosiergerät, welches während des Durchströmens einer Dosierstelle das aus dem Brunnen geförderte Rohwasser kontinuierlich und feinstverteilt mit Sauerstoff gesättigt, dem Filterreaktor zuströmt, danach als Brauchwasser aufbereitet anstehend, einem Druckspeicherbehälter zugeführt wird, und bei Erreichen eines Differenzdruckes, bei ausgeschalteter Förderpumpe, eine Rückspülung zum Säubern des Reaktors über ein Zurückführen des gereinigten Wassers aus dem druckbeaufschlagten, gefüllten Druckspeicherbehälter durchgeführt wird.

3. Verfahren nach Anspruch 1, **dadurch gekennzeichnet, dass** das Dosiermittel ein feinporiges Diaphragma ist, in welchem das Gas zur Herstellung eines konstanten Drucks zur Ausbildung einer feinblasigen Struktur bewegt wird und an der Überleitungsstelle in das flüssige Medium für eine weitere Druckregulierung den Kraftschluss einer als Membran ausgebildeten Manschette überwinden muss.

4. Verfahren nach Anspruch 1, **dadurch gekennzeichnet, dass** die Druckbeaufschlagung des über die Saugleitung in den Boden zurückfließenden, behandelten Wassers mit abgeschalteter Saugpumpe der Wasserversorgungsanlage im Zusammenwirken mit deren Druckspeicherbehälter und Sperren der Saugleitung vor der Pumpe in den Brunnen vorgenommen wird und eine Dosierstelle mit Sauerstoff angereicherte zurückfließende Wasser ohne eine Zwischenbeeinflussung und ―rückhaltung in den Brunnen zurückgeführt wird.

5. Verfahren nach Anspruch 2, **dadurch gekennzeichnet, dass** das aus dem Druckspeicherbehälter über eine Dosierstelle mit Sauerstoff angereicherte zurückfließende Wasser über eine größer erstreckte Länge der Rückführungsleitung in den Brunnen zurückgeführt wird und der Aufbereitungsvorgang mit mindestens einem kontinuierlich arbeitenden Filterreaktor vorgenommen wird.

6. Einrichtung zum stufenlosen, mengen- und druckregulierten Eintragen von Gas in flüssige Medien zum mehrstufigen Aufbereiten von Wasser mit einem Gehäuse, welche ein feinporiges Diaphragma aufweist, das einseitig an seiner Einlassseite (16), mit einem unter Druck gehaltenen Gas beaufschlagt, durchflossen und über seine Übergangsseite (17) mit einer Überleitungsstelle (18) verbunden ist, die von einer das flüssige Medium von dem Diaphragma fernhaltenden Manschette (8) fest umschlossen, in einer Wasserversorgungsanlage, die eine Dosierstelle (1) aufweist, aus dem Boden gefördertes Wasser eine Sperreinrichtung und eine Pumpe (6) in einer vor einem Druckspeicherbehälter (23) verlaufenden Saugleitung (38;38') geleitet und einen Druckspeicherbehälter (23) an der Ausgangsseite eine Leitung (31;32) zugeführt ist, von der abgezweigt eine mit einem weiteren Ventil (27) verbundene Leitung (38;38') verläuft, der eine gesteuerte Dosierstelle, ausgebildet als eine Dosiereinrichtung (1), zwischengeordnet ist, der sich eine Leitung (40) anschließt, die in die Saugleitung (38) vor einer in Saugrichtung der Pumpe (6) angeordneten Sperreinrichtung in die Saugleitung (38) einmündend, angeordnet und das mit Sauerstoff angereicherte Wasser in den Brunnen (30) geführt ist.

7. Einrichtung nach Anspruch 6, **dadurch gekennzeichnet, dass** das Diaphragma an der Dosierstelle (1) seiner Übergangsseite (17) mit einer lanzettenartigen Führung (2) verbunden ist, an der es mit einem konstanten Druck feinblasig austretende Gas einer in das flüssige Medium ragenden Überleitungsstelle (18) zugeleitet ist, in der Gasaustrittsöffnungen (7) vorgesehenen sind, die von der Manschette (8) fest anliegend, das Innere der lanzettenartigen Führung (2) vor einem Flüssigkeitszutritt bewahren, umschlossen ist, wobei ihre mit der lanzettenartigen Führung (2) in Kontakt gebrachte Innenseite fest anliegt und das Gas zwischen der lanzettenartigen Führung (2) und der Innenseite der Manschette (8) zum Austreten gebracht und der Dosierstelle (1) das Diaphragma an seinen parallel zu seinen Längsmittenachsen verlaufenden Außenflächen abgedichtet umschlossen, in den Einsatz (3) eingesetzt ist, wobei die lanzettenartige Führung (2) im Bereich ihrer Überleitungsstelle (18) mindestens eine Auslassöffnung (7) trägt, die von der Manschette (8) überdeckt ist.

8. Einrichtung nach Anspruch 6, **dadurch gekennzeichnet, dass** der Wasserversorgungsanlage einer Saugleitung (38;38') ein Ventil (28) vor der im Behälterbereich positionierten Saugpumpe (6) vorgeordnet und ein weiteres gesteuertes Ventil (27) dem Druckspeicherbehälter (23) auf seiner Auslassseite nachgeordnet ist, wobei der Dosierstelle (1) nachfolgend, die Leitung (39), in die Saugleitung (38) mündend, vor dem ersten Ventil (28) in eine Verbindung gebracht, der auch weiterhin ein Sauerstoffperlenzähler (41) nachgeordnet und mit der Steuerung (33) in eine die Sauerstoffzufuhr regelnde Verbindung gebracht ist.

9. Einrichtung zum Aufbereiten von Wasser durch Entfernen von als Eisen und Mangan anstehenden Beimengungen in einem Filterreaktor (43), der mit Filtermaterial und daran angesiedelten Mikroorganismen aufgefüllt, an seiner Zuflussseite eine Dosierstelle (1) mit einer Sauerstoffdosiereinrichtung aufweist und der Filterreaktor (43) für die Aufnahme des gefilterten Wassers mit einem Druckspeicherbehälter (23) verbunden ist, aus dem bei abgeschalteter Pumpe (6) das Rückspülwasser in den Filterreaktor (43) zurückströmend geführt ist, wobei für den Rückführungsprozess die Leitung (50) Verwendung findet, durch die das aus dem Filterreaktor (43) strömende Brauchwasser im normalen Aufbereitungsprozess vorher dem Druckspeicherbehälter (23) zugeführt worden ist.

10. Einrichtung nach Anspruch 9, **dadurch gekennzeichnet, dass** die Zuführung des Wassers für den Rückspülprozess aus dem Druckspeicherbehälter (23) in den Filterreaktor (43) in der Richtung seiner Mittenachsen von oben nach unten und alternierend in der Richtung seiner Mittenachsen von unten nach oben gerichtet, ausgebildet ist.

11. Einrichtung nach Anspruch 9, **dadurch gekennzeichnet, dass** die Dosierstelle (1) in der Druckleitung (45;46';47) vor mindestens Filterreaktor (43;43') eingeordnet ist, wobei mindestens zwei Filterreaktoren (43;43') parallel geschaltet angeordnet sind.

12. Einrichtung nach Anspruch 9und 11, **dadurch gekennzeichnet, dass** jedem Filterreaktor (43;43') eine Dosierstelle (1) mit einer Dosiereinrichtung in seiner Rohwasserdruckleitung zugeordnet ist.
